(19) Europäisches Patentamt
European Patent Office
Office européen des brevets

(11) Publication number: **0 511 441 A1**

(12) **EUROPEAN PATENT APPLICATION**

(21) Application number: **91303952.5**

(51) Int. Cl.$^5$: **C08G 79/02**, F16J 15/32

(22) Date of filing: **01.05.91**

(43) Date of publication of application: **04.11.92 Bulletin 92/45**

(84) Designated Contracting States: **DE ES FR GB IT SE**

(71) Applicant: **ETHYL PETROLEUM ADDITIVES LIMITED**
**London Road**
**Bracknell, Berkshire RG12 2UW(GB)**

(72) Inventor: **The designation of the inventor has not yet been filed**

(74) Representative: **Collier, Jeremy Austin Grey et al**
**J.A.Kemp & Co., 14 South Square, Gray's Inn**
**London WC1R 5LX(GB)**

(54) **Inhibition of fluoroelastomer degradation.**

(57) Apparatus which includes (a) a housing, (b) a plurality of mechanical parts contained within the housing that require lubrication during operation of the apparatus, (c) a quantity of lubricating oil contained within the housing, and (d) at least one component part having a poly(fluoroalkoxyphosphazene) elastomer surface in direct contact with the lubricating oil at least during operation of the apparatus, the lubricating oil containing at least one component therein causing the lubricating oil to fail the Volkswagen P-VW 3334 Seal Test in the form described in the specification hereof when applied to VITON® AK-6 fluoroelastomer.

EP 0 511 441 A1

Many original equipment manufacturers (OEMs) have expressed concern for several years over the appearance of fluoroelastomer seals after removal from engines during major overhauls.

One OEM has also reported leakages of oil from the camshaft of brand new engines when cars are placed in storage prior to delivery. The deterioration in fluoroelastomer seal performance is attributed to the lubricant. It is well known that interactions involving some additives and even some base oils give rise to dehydrofluorination of the elastomer, which causes changes in it's mechanical properties. The critical property changes are tensile strength and elongation at break expressed as percentage change from the properties of the original fluoroelastomer, and also cracking when the test specimen is bent at 180°. These property criteria form the basis of the Volkswagen seal compatibility test procedure (the Volkswagen P-VW 3334 Seal Test).

Heretofore extensive efforts have been devoted to seeking ways of eliminating or at least minimizing the severity of this fluoroelastomer degradation problem. Some of these efforts are recorded in U.S. Pat. Nos. 4,379,064: 4,455,244; 4,482,464; 4,615,826; 4,636,322; 4,648,980; 4,663,064; 4,699,724; 4,713,189; 4,713,191; 4,889,646; 4,908,145; 4,927,562; 4,940,552; and 4,973,412.

All of these prior efforts have been directed to chemical modifications of additives used in the oil. While this is a feasible approach, it results in additional chemical processing, alteration of lubricant formulations, potential changes in lubricant properties, and an increase in the number and types of raw materials needed for and used in lubricant formulations. Such factors inevitably translate into increased costs, all to the detriment of the motoring public.

This invention solves the problem of fluoroelastomer degradation in a completely different way. Instead of modifying the chemical structure of the lubricant additives, the chemical structure of the fluoroelastomer is changed. In particular, the fluoroelastomer used is such as to be highly resistant to attack by even the most aggressive commercially-available present-day lubricating oil formulations. Yet the fluoroelastomer possesses all of the other properties needed for the service conditions and operations in which it is employed. Thus the invention solves the fluoroelastomer degradation problem without sacrifice of the other properties needed for effective performance as a seal or other fluoroelastomer-based component part.

In accordance with this invention a fluoroelastomer is used having a particular inorganic backbone, namely a backbone composed of repeating phosphazene groups. More particularly, the fluoroelastomers utilized pursuant to this invention are poly(fluoroalkoxyphosphazene) elastomers and compounds thereof. These materials are used per this invention in fabricating component parts such as seals, clutch plate facings, gaskets, diaphragms, and the like so that at least the surface of the part exposed to the aggressive lubricant is composed of one or more poly(fluoroalkoxyphosphazene) elastomers and/or compounds thereof.

This invention thus provides apparatus which includes (a) a housing, (b) a plurality of mechanical parts contained within the housing that require lubrication during operation of the apparatus, (c) a quantity of lubricating oil contained within the housing, and (d) at least one component part having a poly-(fluoroalkoxyphosphazene) elastomer surface in direct contact with the lubricating oil at least during operation of the apparatus, said lubricating oil containing at least one component therein causing said lubricating oil to fail the Volkswagen P-VW 3334 Seal Test in the form described hereinafter when applied to VITON® AK-6 fluoroelastomer. Preferred apparatus of this invention include internal combustion engines, viz. spark-ignition (gasoline) engines and compression-ignition (diesel) engines; manual and automatic transmissions; and gear boxes. These can be of any suitable construction and design provided of course that the internal component parts are lubricated by a lubricating oil.

It will be seen that the lubricating oil used the apparatus must be one which, in the Volkswagen P-VW 3334 Seal Test (hereinafter described), gives a failure with VITON® AK-6 fluoroelastomer. The fluoroelastomer used pursuant to this invention -- a poly(fluoroalkoxyphosphazene) elastomer -- passes the same test procedure.

Preferred poly(fluoroalkoxyphosphazene) elastomers are those characterized by being a substantially linear polymer having randomly distributed repeating units represented by the formula

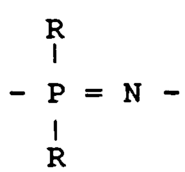

wherein R is a fluoroalkoxy group having the structure

$F_3C - (CF_2)_n - CH_2 -$

wherein n is 0 or an integer in the range of from 1 to 20 and wherein the polymer has at least three different kinds of such fluoroalkoxy groups in its structure.

Methods for the preparation of poly(fluoroalkoxyphosphazene) elastomers are known. See for example U.S. Pat. No. 3,315,688. Poly(fluoroalkoxyphosphazene) elastomers suitable for use in the practice of this invention are available as articles of commerce from Ethyl Corporation and Ethyl S.A. under the EYPEL trade mark. Particularly preferred are EYPEL®-F compounds and EYPEL®-FXT compounds, especially EYPEL®-F 759 compound and EYPEL®-F 808 compound.

To illustrate the advantages embodied in the apparatus of this invention, a series of standard Volkswagen P-VW 3334 Seal Tests were carried out wherein test specimens of poly-(fluoroalkoxyphosphazene) elastomer (EYPEL®-F fluoroelastomer) and test specimens of VITON® AK-6 fluoroelastomer were immersed in an aggressive API SG/CD grade lubricating oil formulation for 168 hours at 150 ° C. The resultant specimens were air dried and subjected to measurements of tensile strength and elongation at breakage and compared to the same measurements of identical specimens of the same respective fluoroelastomers which had not been subjected to such immersion conditions but rather, had been maintained in air at ambient temperatures. The property changes in tensile strength and elongation at breakage are expressed as percentage change from the properties of the untreated specimens.

It was found that in such tests the oil and the respective fluoroelastomers yielded the following results:

| Fluoroelastomer | Elongation Change, % | Tensile Strength Change, % | Cracking |
|---|---|---|---|
| VITON® AK-6 fluoroelastomer | -50 | -55 | Yes |
| EYPEL®-F fluoroelastomer | +6.0 | +2.8 | No |
| Volkswagen Test Limits | ± 25 max. | ± 20 max. | No |

It will be seen that the lubricating oil and the poly(fluoroalkoxyphosphazene) elastomer (EYPEL®-F fluoroelastomer) met the criteria for use pursuant to this invention.

The particular makeup of the lubricating oil composition used in the practice of this invention is of no consequence provided that the particular lubricating oil composition used in the apparatus gives a failure in the above version of the P-VW 3334 Seal Test with VITON® AK-6 fluoroelastomer, gives a pass in such test with the poly(fluoroalkoxyphosphazene) elastomer selected for use in the apparatus, and otherwise is suitable for use, and meets the requirements for use, as a lubricating oil in the particular type of apparatus involved under the service conditions in which such apparatus is to be employed. VITON® AK-6 is a special fluoroelastomer representative of fluoroelastomers in commercial use as seals, diaphragms, and like articles. Quantities of this material for tests are available from Parker-Pradifa GMBH, Postfach 1641, D-7120 Bietigheim-Bissingen, Germany, and from Hallite Polytek Ltd., Oldfield Road, Hampton, Middlesex TW12 2HT, England.

## Claims

1. Apparatus which includes (a) a housing, (b) a plurality of mechanical parts contained within the housing that require lubrication during operation of the apparatus, (c) a quantity of lubricating oil contained within the housing, and (d) at least one component part having a poly(fluoroalkoxyphosphazene) elastomer surface in direct contact with the lubricating oil at least during operation of the apparatus, said lubricating oil containing at least one component therein causing said lubricating oil to fail the Volkswagen P-VW 3334 Seal Test in the form described in the specification hereof when applied to VITON® AK-6 fluoroelastomer.

2. Apparatus in accordance with Claim 1 wherein said component is a seal.

3. Apparatus in accordance with Claim 1 or Claim 2 wherein said apparatus is an internal combustion engine.

4. Apparatus in accordance with Claim 1 or Claim 2 wherein said apparatus is a spark-ignition internal combustion engine.

5. Apparatus in accordance with Claim 1 or Claim 2 wherein said apparatus is a compression-ignition

engine.

6. Apparatus in accordance with Claim 1 or Claim 2 wherein said apparatus is a manual or automatic transmission.

7. Apparatus in accordance with Claim 1 or Claim 2 wherein said apparatus is a gear box.

8. Apparatus in accordance with any of Claims 1 through 7 wherein said poly(fluoroalkoxyphosphazene) elastomer is characterized by being a substantially linear polymer having randomly distributed repeating units represented by the formula

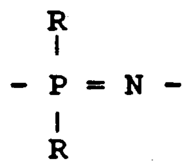

wherein R is a fluoroalkoxy group having the structure

$F_3C - (CF_2)_n - CH_2 -$

wherein n is 0 or an integer in the range of from 1 to 20 and wherein the polymer has at least three different kinds of such fluoroalkoxy groups in its structure.

9. The use, in a system in which a lubricant, which fails the Volkswagen P-VW 3334 seal test in the form described in the specification hereof when applied to "Viton" AK-6 fluoroelastomer, comes into contact, at least intermittently, with a fluoroelastomer, of a poly(fluoroalkoxyphosphazene) elastomer as the said fluoroelastomer.

European Patent Office

# EUROPEAN SEARCH REPORT

Application Number

EP 91 30 3952

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 945 966 (VICIC)<br>* Whole document *<br>----- | 1,8 | C 08 G 79/02<br>F 16 J 15/32 |
| | | | TECHNICAL FIELDS SEARCHED (Int. Cl.5) |
| | | | C 08 G<br>F 16 J |

The present search report has been drawn up for all claims

| Place of search | Date of completion of the search | Examiner |
|---|---|---|
| THE HAGUE | 06-12-1991 | LEGER M.G.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)